# EUROPÄISCHE PATENTSCHRIFT

(11) **EP 0 519 952 B1**
(45) Veröffentlichungstag und Bekanntmachung des Hinweises auf die Patenterteilung: **07.09.1994**
(21) Anmeldenummer: 91905400.7
(22) Anmeldetag: 25.02.1991
(51) Int. Cl.: H01M 2/06

(54) **DURCHFÜHRUNG EINES BLEIPOLES DURCH DEN GEFÄSSDECKEL VON AKKUMULATORZELLEN**
FEED-THROUGH FOR A LEAD TERMINAL ON THE COVER OF AN ACCUMULATOR CELL
PASSAGE POUR UNE BORNE POLAIRE EN PLOMB PASSANT PAR LE COUVERCLE D'ELEMENTS D'ACCUMULATEUR

(30) Priorität: 13.03.1990 AT 598/90
(43) Veröffentlichungstag der Anmeldung: 30.12.1992
(73) Patentinhaber: BÄREN BATTERIE GmbH, A-9181 Feistritz im Rosental (AT)
(72) Erfinder: BRINKMANN, Jürgen, D-5820 Gevelsberg (DE); WIDDER, Josef, A-9073 Viktring (AT)
(74) Vertreter: Holzer, Walter, Dipl.-Ing.
(86) Internationale Anmeldenummer: AT9100032
(87) Internationale Veröffentlichungsnummer: WO9114292

(56) Entgegenhaltungen:
- EP-A- 0 113 399
- FR-A- 2 359 517
- US-A- 4 605 605

## Beschreibung

Die Erfindung betrifft die Durchführung eines Bleipoles durch den Gefäßdeckel von Akkumulatorzellen.

In der Praxis bestehen Probleme, die Durchführung eines Bleipoles durch den Deckel einer Akkumulatorzelle abzudichten, speziell am positiven Pol der Zelle. Infolge der positiven Polarität und der Anwesenheit von Elektrolyt (H₂SO₄) kommt es nämlich an der Poloberfläche zur Umwandlung von Blei in Bleioxid, das ein größeres Volumen hat als das Ausgangsmaterial des Poles. Auf diese Weise bekommt die Oberfläche eine etwas poröse Struktur. Durch Kapillarwirkung wird der Elektrolyt an und in die Dichtungszonen zwischen der Bleioberfläche des Poles und dem Dichtungsmaterial transportiert. Die Oxidbildung setzt sich fort und das Oxid dringt dadurch keilförmig zwischen die Dichtungsflächen und hebt das Dichtungsmaterial langsam vom Pol ab. Dies führt zu weiterem Vordringen der Säure in die Dichtungszonen, verbunden mit einem weiteren Vordringen der Oxidschicht. Dieser Vorgang wiederholt sich, bis die gesamte Dichtungszone unterwandert ist.

Die Säure dringt also nicht an der Oberfläche des Poles durch die Dichtung hindurch vor, sondern innerhalb der Poloberfläche infolge Veränderung derselben, weil aus einer relativ glatten Bleioberfläche eine dünne poröse Oberflächenschicht aus Bleidioxid (PbO₂) erzeugt wird. Es ist bekannt, daß viele zentimeterlange Dichtungsflächen im Laufe der Betriebsjahre auf diese Weise unterwandert werden, wobei dieser Vorgang durch die bisher bekannten Dichtungen nicht gestoppt werden konnte.

Undichte Pole führen aber zu erheblichen Problemen in der Praxis. Zum einen wird die Isolation an der Zellenoberfläche durch die austretende Säure verringert. Zum anderen führt sie aber auch an dem von außen sichtbaren Polteil zur Korrosion. Bei Verwendung von anderen Metallen als Blei, z.B. Kupfer, als Poleinlage und als Verbinder mit verbesserter Stromleitfähigkeit wird dieses Metall auf dem positiven Pol in relativ kurzer Zeit völlig korrodiert und damit die Zelle zerstört. Mit der Oxidation der Poloberfläche verbundene Gasentwicklung führt im Bereich der Dichtungszonen von zänflüssigen Vergußmassen zu Gasblasen innerhalb dieser Vergußmasse der Zellen und dadurch zu einer scheinbaren Volumensvergrößerung der Vergußmasse, so daß diese aus dem Polvergußteil herausquillt.

Die einzige bisher bekannt gewordene Maßnahme, ein Unterwandern der Dichtung durch die Säure zu vermeiden, besteht darin, die Dichtungsfläche mit sehr hoher Flächenpressung zu bilden. Praktisch ist dies durch einen Gummi-O-Ring möglich, der durch eine auf den Polschaft aufgeschraubte Überwurfmutter bzw. eine Verlängerung derselben definiert auf eine Polschaftfläche gepreßt wird (DE-OS 32 14 225, EP-A1-0 228 503). Die Voraussetzungen hiefür sind: Die Bleioberfläche muß sehr glatt sein, darf keine Lunkerstellen, keinen Grat und kein Oxid enthalten, und die Fließfähigkeit des Bleis muß bei der konstruktiven Lösung berücksichtigt werden, weil Blei unter hohem Druck fließt.

Ein weiteres Problem ergibt sich dadurch, daß im Laufe der Lebenszeit einer Batterie, vornehmlich einer Traktionsbatterie, die positiven Bleileiter anoxidieren. Dies führt zu einer Volumensvergrößerung des Leitermaterials. In der Praxis führt dies unter anderem zu einem Längenwachstum der positiven Zellenplatten. Es muß deshalb konstruktiv dafür Sorge getragen werden, daß dieses Längenwachstum nicht zu hohen mechanischen Beanspruchungen der Platten und der Zellengefäße führt.

Es ist bekannt, die Platten am oberen Teil des Zellengefäßes aufzuhängen, damit sie nach unten wachsen können. Dies ergibt aber den Nachteil einer starken mechanischen Belastung des Zellengefäßes. Bei Zellen, deren Platten auf dem Zellenboden aufstehen, ist die Zelle entweder oben offen, oder der Zellendeckel ist gegenüber dem Zellengefäß verschiebbar angebracht, was den Nachteil hat, daß die Zelle nicht dicht ist.

Bei einem Verschweißen von Zellendeckel und Zellengefäß bei vorhandener mechanisch fester Verbindung zwischen Zellendeckel und Pol führt das Wachsen der Platten zu hohen mechanischen Beanspruchungen der Schweißverbindung der Platten und der Zellengefäße sowie der Zellendeckel und kann sogar ihre Zerstörung bewirken. Bei flexiblen Deckeln beulen sich anderseits die Deckel aus. Auch hier kann es zu Zerstörungen kommen.

Bei einer Zellenkonstruktion, bei welcher die Zellendeckel und das Zellengefäß thermisch verschweißt werden und bei der die Dichtung zwischen Pol und Deckel an vorher definierten Stellen beider Teile hindurchgeführt wird, handelt es sich überdies um ein überbestimmtes System, bei welchem bereits beim Zusammenschweißen von Zellendeckel und Zellengefäß bzw. bei der Herstellung der Dichtung zwischen Pol und Deckel infolge von Fertigungstoleranzen teilweise erhebliche mechanische Spannungen in der Zelle erzeugt werden, die sich den mechanischen Spannungen infolge des Plattenwachstums überlagern.

Schließlich besteht bei Poldurchführungen der einleitend angegebenen Art das Problem, daß durch das Aufschweißen des Zellenverbinders auf das obere Ende des Polschaftes wegen der starken Erwärmung beträchtliche mechanische Spannungen im Dichtungsbereich auftreten, die zu Schäden führen können, weil die an der Dichtung beteiligten Materialien zum Teil sehr unterschiedliche Wärmedehnungskoeffizienten haben oder sie infolge der hohen Temperatur ihre Festigkeit verlieren. Überdies kann bei Dichtungskonstruktionen, bei denen ein thermoplastischer Kunststoff um den Pol gespritzt ist, durch die hohe Temperatur beim Schweißen ein kurzzeitiges Schmelzen des Kunststoffes eintreten, wodurch die Dichtfunktion geschmälert oder gar zerstört werden kann.

Die Erfindung zielt darauf ab, eine Poldurchführung zu schaffen, welche bei Zellen mit mechanisch fester Verbindung zwischen Zellengefäß und nicht flexiblem Zellendeckel sowie mit Polen mit aufgeschweißtem Verbinder die geschilderten Nachteile vermeidet und eine einwandfreie Abdichtung des Poles gegenüber dem Zellendeckel ermöglicht, bei gleichzeitiger Vermeidung von mechanischen Beanspruchungen des Zellengefäßes, des Deckels und des Plattensatzes sowie der Dichtungszone infolge Wachsen der positiven Platten und des Aufschweißens des Zellenverbinders.

Die erfindungsgemäße, insbesondere für positive Pole bestimmte Poldurchführung, bei welcher auf dem Schaft des Bleipoles in Höhe des Zellendeckels eine Ringhülse aus Kunststoff aufgebracht ist, welche den Zellendeckel durchsetzt und mit diesem abdichtend verbunden ist, zeichnet sich dadurch aus, daß die Ringhülse einen Innendurchmesser hat, der um ein vorbestimmtes Ausmaß größer als der Außendurchmesser des Polschaftes ist und daß der Polschaft im Bereich der Ringhülse zumindest zwei mit gegenseitigem Axialabstand angeordnete Ringnuten mit Rechteckquerschnitt aufweist, in denen je ein Dichtungs-O-Ring aus Elastomermaterial angeordnet ist, wobei die Differenz zwischen dem Innendurchmesser der Ringhülse und der radialen Tiefe der Ringnuten sowie deren axiale Breite so bemessen ist, daß die Dichtungs-O-Ringe von einem kreisrunden Querschnitt zu einem Querschnitt mit einer kürzeren und einer längeren Achse verformt sind, so daß die Dichtungs-O-Ringe an vier Abflachungszonen an die Ringnuten und an die Ringhülse angepreßt werden.

Gemäß einer bevorzugten Ausführungsform der Erfindung sind im Polschaft drei Ringnuten zur Aufnahme der Dichtungs-O-Ringe ausgebildet.

Auf diese Weise ist der Polschaft gegen den Zellendeckel unter Ermöglichung einer Relativbewegung zwischen dem Pol einerseits und dem Zellendeckel anderseits sowie eines allfälligen Toleranzausgleiches einwandfrei abgedichtet. Ein weiterer Vorteil der Erfindung besteht darin, daß keinerlei mechanische, d.h. formschlüssige Verbindung zwischen dem Bleipol und der Dichtungsanordnung bzw. dem Zellendeckel vorhanden ist, die infolge von temperaturbedingten Dehnungen des Polschaftes beschädigt werden könnte. Da die Ringhülse Spiel zum Polschaft hat, somit durch einen Luftspalt von diesem getrennt ist, steigt ihre Temperatur beim Aufschweißen des Bleiverbinders auf das obere Polschaftende nicht in dem Maße an wie jene des Schaftes, so daß das Material der Ringhülse thermisch nicht sehr beansprucht und die Abdichtung gegen den Zellendeckel nicht beeinträchtigt wird. Der Schaft des Poles kann anderseits unbehindert wachsen, weil dies durch die Dichtungs-O-Ringe ermöglicht wird, die auf der glatten Innenseite der Ringhülse gleiten können. Bei einer erfindungsgemäßen 2- oder 3-0-Ring-Dichtung ist eine 6- bzw. 9-fache Sicherheit der Abdichtung gegeben, weil diese über insgesamt sechs bzw. neun Dichtungszonen zwischen Poloberfläche und O-Ringen erfolgt, nämlich über je zwei axiale und eine radiale Fläche pro Dichtring. Das erfindungsgemäße Dichtungssystem verhindert, daß weder Säure aus der Zelle nach außen, noch Säure oder sonstige Verunreinigungen von der Umgebung her in die Zelle dringen können. Außerdem wird im Bereich des unteren Endes der Ringhülse infolge des Luftspaltes ein unbehindertes Vordringen der Säure bis zum untersten Dichtungsring ermöglicht und dadurch ein Aufkonzentrieren der Säure in diesem Bereich verhindert. Ferner kann das im Luftspalt gebildete Bleioxid trotz seines größeren Volumens keine mechanischen Beanspruchungen der Ringhülse bewirken.

Die Erfindung wird nachfolgend an einem Ausführungsbeispiel unter Bezugnahme auf die Zeichnungen näher erläutert, in denen
Fig. 1 einen Schnitt durch eine Poldurchführung gemäß der Erfindung und
Fig. 2 ein Detail der Poldurchführung nach Fig. 1 ebenfalls im Schnitt zeigen.

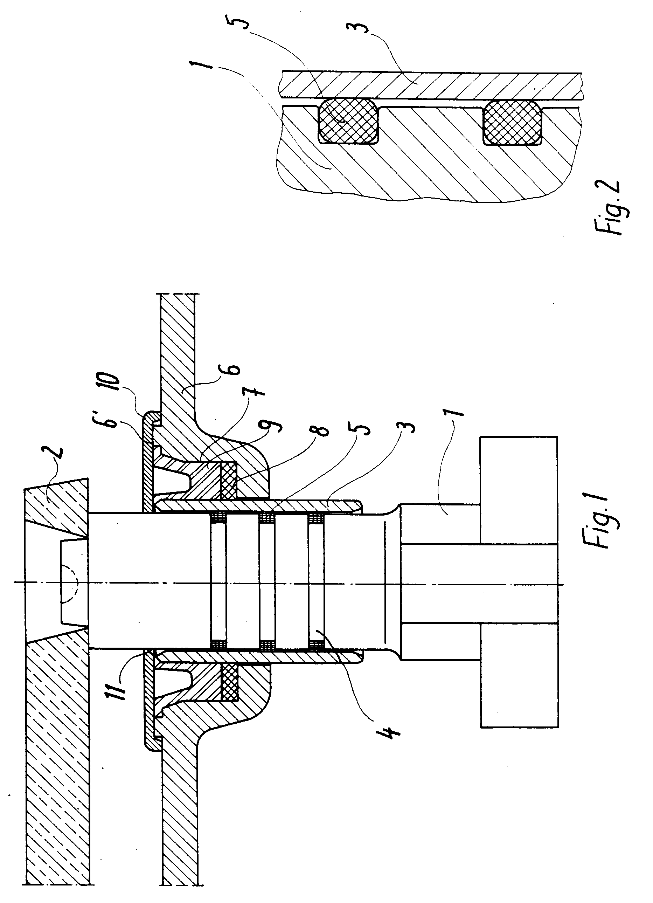

Gemäß Fig. 1 ist auf das obere Ende eines Schaftes 1 eines Bleipoles einer Akkumulatorzelle, der insbesondere ein positiver Pol ist, ein Zellenverbinder 2 aufgeschweißt, der ebenfalls aus Blei besteht. Der zylindrische Schaft 1 ist über einen Abschnitt seiner Länge von einer Ringhülse 3 aus Kunststoff mit hoher mechanischer Festigkeit, großer Temperaturbeständigkeit und glatter Innenfläche umgeben, die vorbestimmtes Spiel zum Schaft hat und somit durch einen definierten Luftspalt von diesem thermisch isoliert ist. Im Bereich der Ringhülse 3 weist der Schaft 1 drei mit gegenseitigem Abstand angeordnete Ringnuten 4 mit Rechteckquerschnitt zur Aufnahme von Dichtungs-O-Ringen 5 aus Gummi auf. Der Durchmesser bzw. die radiale Tiefe der Ringnuten 4 sowie deren Breite in axialer Richtung und der Innendurchmesser der Ringhülse 3 sind so aufeinander abgestimmt, daß die O-Ringe 5 zu einem im wesentlichen ovalen Querschnittsprofil mit einer kürzeren und einer längeren Achse zusammengedrückt werden, wie dies im Detail aus Fig. 2 hervorgeht, wodurch jeder Dichtungsring mit vier Abflachungszonen gegen die Ringnutwandung und gegen die Ringhülse gepreßt wird.

Die Ringhülse 3 durchsetzt einen Zellendeckel 6 aus Kunststoff, der eine im wesentlichen becherförmige Ausnehmung 7 bildet, an deren Boden ein die Ringhülse 3 umgebender Dichtungsring 8 aus Gummi mit Rechteckquerschnitt angeordnet ist. Der Dichtungsring 8 wird von einer Vergußmasse 9, z.B. einem Zweikomponentenkleber, d.h. einer Mischung aus Kunstharz und Härter, überlagert, welche den Becher füllt. An ihren Stirnenden ist die Ringhülse 3 an der Innenseite konisch erweitert, so daß sie auf die Dichtungs-O-Ringe 5 ohne Beschädigung derselben aufgeschoben werden kann.

Die Oberseite der Vergußmasse 9, eine Abdichtungsringzone 6′ des Deckels und das obere Ende der Ringhülse 3 sind von einem Abdeckring 10 abgedeckt.

Beim Wachsen der Zellenplatten bewegt sich der Polschaft 1 nach oben und mit ihm die Dichtungs-O-Ringe 5. Hiebei wird die Abdichtwirkung um die Dichtungs-O-Ringe 5 herum in keiner Weise beeinträchtigt, weil die Ringe zusammengedrückt sind und auf der glatten Innenseite der Ringhülse 3 gleiten. Infolge dieses Gleitens treten bei der Bewegung nur ganz geringe Kräfte auf, so daß die Dichtungsringe 5 innerhalb der Ringnuten 4 nicht zusätzlich mechanisch beansprucht werden und ihre Dichtfunktion nicht beeinträchtigt wird. Der Deckel 6 wird dadurch ebenfalls nicht deformiert, insbesondere wird die Schweißung bzw. Verklebung zwischen dem Deckel und dem Zellenkasten nicht belastet. Auch auf die Zellenplatten wird infolge dieser Konstruktion keine große Kraft ausgeübt, die gegebenenfalls zu Beschädigungen führen könnte.

Bei der dargestellten Ausführungsform bilden die Ringhülse 3, der Abdeckring 10 und der Zellendeckel 6 durch die kraftschlüssige Verbindung untereinander eine kompakte Einheit. Bei starken Rüttelbewegungen, der die ganze Zelle im praktischen Betrieb ausgesetzt sein kann, können diese Teile relativ zueinander keine Relativbewegung ausführen. Es könnten jedoch die Rüttelbeanspruchungen der ganzen Zelle eine Relativbewegung zwischen dem Plattensatz mit dem angeschweißten Pol einerseits und der Ringhülse mit dem damit fest verbundenen Deckel und Zellengefäß anderseits auftreten, ohne daß dabei große Kräfte auf die Zellenkomponenten, insbesondere auf die Dichtungszonen, einwirken. Anderseits kann sich beim Wachsen der Platten der Polschaft 1 gegenüber dem Deckel 6 nach oben bewegen, ohne dabei große Kräfte auf die kompakte Einheit auszuüben.

Es versteht sich, daß die erläuterten Ausführungsbeispiele im Rahmen des allgemeinen Erfindungsgedankens verschiedentlich abwandelbar sind.

## Patentansprüche

1. Durchführung eines Bleipoles durch den Gefäßdeckel von Akkumulatorenzellen, bei welcher auf dem Schaft des Bleipoles in Höhe des Zellendeckels eine Ringhülse aus Kunststoff aufgebracht ist, welche den Zellendeckel durchsetzt und mit diesem abdichtend verbunden ist, dadurch gekennzeichnet, daß die Ringhülse (3) einen Innendurchmesser hat, der um ein vorbestimmtes Ausmaß größer als der Außendurchmesser des Polschaftes (1) ist und daß der Polschaft (1) im Bereich der Ringhülse (3) zumindest zwei mit gegenseitigem Axialabstand angeordnete Ringnuten (4) mit Rechteckquerschnitt aufweist, in denen je ein Dichtungs-O-Ring (5) aus Elastomermaterial angeordnet ist, wobei die Differenz zwischen dem Innendurchmesser der Ringhülse und der radialen Tiefe der Ringnuten sowie deren axiale Breite so bemessen ist, daß die Dichtungs-O-Ringe von einem kreisrunden Querschnitt zu einem Querschnitt mit einer kürzeren und einer längeren Achse verformt sind, so daß die Dichtungs-O-Ringe an vier Abflachungszonen an die Ringnuten und an die Ringhülse angepreßt werden.

2. Poldurchführung nach Anspruch 1, dadurch gekennzeichnet, daß im Polschaft (1) drei Ringnuten (4) zur Aufnahme der Dichtungs-O-Ringe (5) ausgebildet sind.

## Claims

1. Bushing for a lead terminal through the box cover of storage battery cells, in which on the post of the lead terminal at the level of the cell cover is mounted a plastic ring sleeve which extends through the cell cover and is sealingly connected thereto, characterised in that the ring sleeve (3) has an inside diameter which is larger by a predetermined extent than the outside diameter of the terminal post (1) and in that the terminal post (1) in the region of the ring sleeve (3) comprises at least two mutually axially spaced-apart annular grooves (4) of rectangular cross-section in each of which is arranged a sealing O-ring (5) of elastomer material, wherein the difference between the inside diameter of the ring sleeve and the radial depth of the annular grooves as well as the axial width thereof is such that the sealing O-rings are deformed from a round cross-section to a cross-section with one shorter and one longer axis, so that the sealing O-rings in four flattened zones are pressed against the annular grooves and against the ring sleeve.

2. Terminal bushing according to claim 1, characterised in that in the terminal post (1) are formed three annular grooves (4) for receiving the sealing O-rings (5).

## Revendications

1. Passage pour une borne polaire en plomb passant par le couvercle d'éléments d'accumulateur, dans lequel une douille annulaire en matière plastique est adaptée sur le fût de la borne polaire en plomb à la hauteur du couvercle de l'élément, traverse le couvercle de l'élément et est unie de façon étanche à celui-ci, caractérisé en ce que la douille annulaire (3) a un diamètre intérieur qui est plus grand, avec une ampleur déterminée au préalable, que le diamètre extérieur du fût de borne (1) et en ce que le fût de borne (1) présente, dans la région de la douille annulaire (3), au moins deux gorges annulaires (4) à section rectangulaire, espacées axialement les unes des autres, dans chacune desquelles est logé un anneau torique d'étanchéité (5) en matière élastomère, la différence entre le diamètre intérieur de la douille annulaire et la profondeur radiale des gorges annulaires, de même que leur largeur axiale étant dimensionnée de façon que les anneaux toriques d'étanchéité soient déformés d'une section circulaire à une section présentant un plus petit axe et un plus grand, de manière que les anneaux toriques d'étanchéité soient pressés dans quatre zones d'aplatissement dans les gorges annulaires et sur la douille annulaire.

2. Passage pour une borne polaire suivant la revendication 1, caractérisé en ce que trois gorges annulaires (4) sont pratiquées dans le fût de borne (1) pour recevoir les anneaux toriques d'étanchéité (5).
